Europäisches Patentamt

European Patent Office

Office européen des brevets

(11) Publication number: **0 129 353**
**A2**

## (12) EUROPEAN PATENT APPLICATION

(21) Application number: **84303632.8**

(22) Date of filing: **30.05.84**

(51) Int. Cl.³: **H 02 G 3/06**

(30) Priority: **15.06.83 ZA 834404**

(43) Date of publication of application:
**27.12.84 Bulletin 84/52**

(84) Designated Contracting States:
**AT BE CH DE FR GB IT LI LU NL SE**

(71) Applicant: **CULLINAN HOLDINGS LIMITED trading as MARTCO**
**Premier Street**
**Olifantsfontein Transvaal Province(ZA)**

(72) Inventor: **Atkins, Edward Arthur**
**1 Van der Stel Street Alberente**
**Alberton Transvaal Province(ZA)**

(74) Representative: **Arthur, Bryan Edward et al,**
**Withers & Rogers 4 Dyer's Buildings Holborn**
**London EC1N 2JT(GB)**

(54) A cable gland.

(57) A cable gland for an electric cable having a sheath of armour wires, which cable gland includes a thimble; a sleeve for the cable comprising a frusto-conical armour spreading part receivable in the thimble to clamp the armour wires therein, and an auxiliary, cylindrical part fast with the part and separable therefrom under a predetermined torque; and an urging and locking member for urging the part into the thimble and for locking the part therein. An end of the member is screwthreadedly receivable on the part of the sleeve, and the opposite end is screwthreadedly receivable on a cylindrical body portion of the thimble. An internally screwthreaded nut is receivable on the part of the sleeve for securing the sleeve through a hole in a junction box.

24  28  /12  26

FIG. I

THIS INVENTION relates to a cable gland for anchoring an end of an electric cable having a protective sheath of armour wires, to a junction box for example.

According to the invention there is provided a sleeve for a cable gland, which includes

an armour spreading part receivable in a thimble to clamp armour wires of an electric cable therein; and

an auxiliary part fast with the armour spreading part and separable therefrom under torque, the auxiliary part being engageable by an urging member to urge the armour spreading part into the thimble.

The sleeve may include a frangible connecting region between the armour spreading part and the auxiliary part. For example, the armour spreading part and the auxiliary part may be integral with an interconnecting frangible web. Instead, the armour spreading part and the auxiliary part may be joined fast together by a weld, solder, adhesive, or the like, such that under torque they separate in the region of the join.

The armour spreading part may be frusto-conical, and the auxiliary part may be cylindrical.

The invention extends to a cable gland for an electric cable having a protective sheath of armour wires, which includes

a thimble;

a sleeve for the cable, according to the invention, comprising an armour spreading part receivable in the thimble to clamp the armour wires therein, and an auxiliary part fast therewith and separable therefrom by a predetermined torque; and

an urging member engageable with the auxiliary part and the thimble for urging the armour spreading part into the thimble and for securing the armour spreading part therein.

The urging member may be screw-threadedly receivable on the auxiliary part of the sleeve and further may be engageable with the thimble.

- 3 -

The invention is now described by way of example, with reference to the accompanying drawings in which

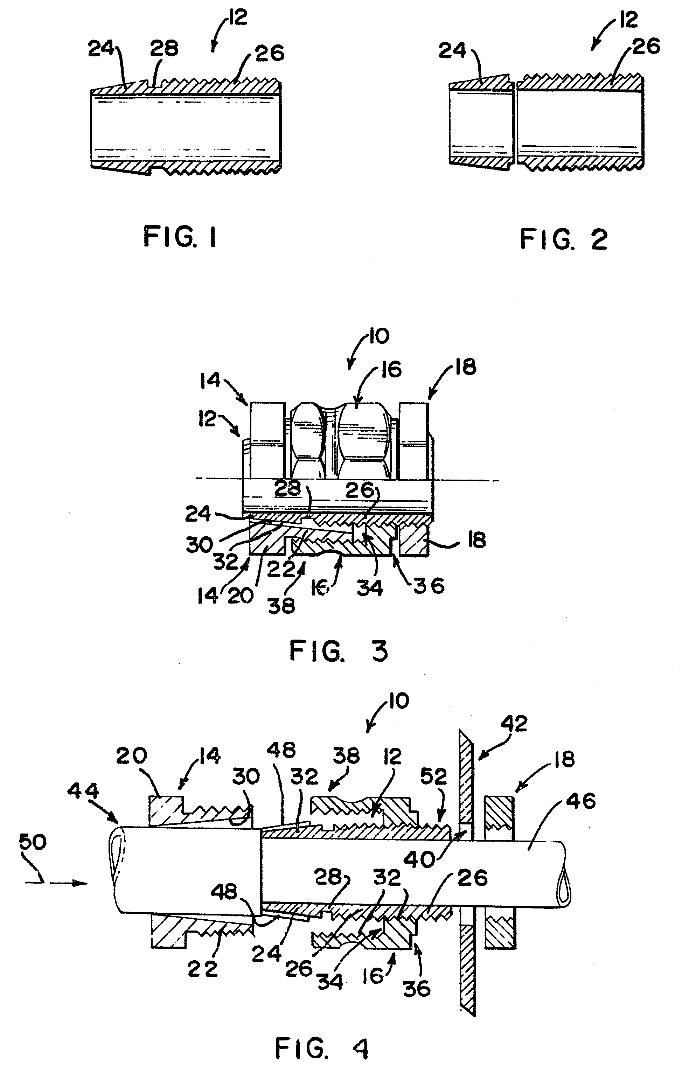

Figure 1 is a section through a sleeve for a cable gland, according to the invention;

Figure 2 is a section through the sleeve of Figure 1 which has been separated into two parts;

Figure 3 is a partly sectioned view of an assembled cable gland according to the invention, which includes the sleeve of Figure 1; and

Figure 4 is an exploded sectioned view of a dismantled cable gland in the process of being assembled for use.

In the drawings, reference numeral 10 generally indicates a cable gland according to the invention, and reference numeral 12 generally indicates a sleeve for a cable gland according to the invention.

The cable gland 10 includes a thimble 14, the sleeve 12, an urging and locking member 16, and a securing nut 18.

The thimble 14 comprises a head portion 20 and a cylindrical body portion 22 which is externally screw-threaded.

The sleeve 12 comprises a frusto-concical part 24 and an auxiliary, cylindrical part 26 fast therewith. The parts 24 and 26 are integral with an interconnecting, frangible web 28 which is frangible under a predetermined torque to provide the parts 24 and 26 in a separated configuration. The part 26 is externally screw-threaded.

The frusto-conical part 24 is receivable in the thimble 14. The inner curved wall 30 of the thimble 14 is substantially complementary to the outer wall 32 of the part 24 of the sleeve 12.

The locking member 16 is internally screw-threaded and the inner curved wall 32 thereof is stepped at 34 such that one end 36 thereof is screw-threadedly receivable on the auxiliary part 26 of the sleeve 12, and the opposite end 38 is screw-threadedly receivable on the wider body portion 22 of the thimble 14.

The securing nut 18 is internally screw-threaded and receivable on the auxiliary part 26 of the sleeve 12 for securing the sleeve 12 through a hole 40 in a junction box 42 (only a part whereof is shown in section in Figure 4).

The cable gland 10 is for use in anchoring an electric cable 44 comprising a core 46 and a sheath of armour wires 48, to the junction box 42.

The cable gland 10 is dismantled as shown in Figure 4, with only the sleeve 12 and the locking member 16 screw-threadedly attached to one another. The cable 44 is threaded through the thimble in a direction indicated by an arrow 50 in Figure 4. The armour wires 48 are spread by the part 24 of the sleeve 12, and the core 46 is threaded through the sleeve 12. The locking member 16 is moved along the cylindrical part 26 of the sleeve 12 until it is in a suitable position to engage the thimble 14. Thereafter the locking member 16 and the thimble 14 are relatively rotated thereby urging the frusto-conical part 24 of the sleeve 12 into the thimble 14 and securing it therein to clamp the armour wires 48 between the inner and outer walls 30 and 32 of the thimble 14 and part 24 respectively.

The parts 24 and 26 of the sleeve 14 may remain fast with each other during the above-described assembly of the cable gland 10. However, should one of the parts 24 and 26 be subjected to a differential torque of a predetermined magnitude to damage the armour wires if the part 24 is thereby caused to rotate, the web 28 will break to render the part 24 independent of the part 26 and freely rotatable relative thereto.

Finally, the free end 52 of the cylindrical part 26 is threaded through the hole 40 in the junction box 42 and secured therein by fastening the nut 18 on to the part 26.

Advantages of the invention, at least as exemplified, includes the feature that the sleeve can be attached to the locking member prior to use, to obviate loss of the sleeve during assembly of the cable gland in use. Further, this arrangement obviates the disadvantage of other, known cable glands having a separate armour spreading sleeve, of inserting the armour spreading sleeve the wrong way around into the thimble. Yet further, possible damage to the armour wires of an electric cable used therewith is inhibited by the tendency of the armour spreading part of the sleeve to detach from the locking member under a sufficient, predetermined torque. Even further, in cases where the cable gland is required to be secured to a junction box or the like in a manner necessitating rotation of the cable and facilitated by non-rotation of the sleeve relative to the locking member, the cable gland can be secured to the junction box or the like when the parts of the sleeve are fast with each other and hence with the locking member, tightening of the locking member on the thimble being undertaken subsequently.

- 1 -

CLAIMS:

1.      A sleeve for a cable gland, which includes

an armour spreading part receivable in a thimble to clamp armour wires of an electric cable therein;  and

an auxiliary part fast with the armour spreading part and separable therefrom under a predetermined torque, the auxiliary part being engageable by an urging member to urge the armour spreading part into the thimble.

2.      A sleeve as claimed in Claim 1 which includes a frangible connecting region between the armour spreading part and the auxiliary part.

3.      A sleeve as claimed in Claim 1 or Claim 2 in which the armour spreading part and the auxiliary part are integral with an interconnecting frangible web.

4.      A sleeve as claimed in any one of the preceding claims wherein the armour spreading part is frusto-conical and the auxiliary part is cylindrical.

5.      A new sleeve for a cable gland substantially as herein described and illustrated.

6.      A cable gland for an electric cable having a protective sheath of armour wires, which includes

     a thimble;

     a sleeve for the cable, as claimed in any one of Claims 1 to 5, comprising an armour spreading part receivable in the thimble to clamp the armour wires therein, and an auxiliary part fast therewith and separable therefrom by a predetermined torque; and

     an urging member engageable with the auxiliary part and the thimble for urging the armour spreading part into the thimble and for securing the armour spreading part therein.

7.      A cable gland as claimed in Claim 6 wherein the urging member is screw-threadedly receivable on the auxiliary part of the sleeve.

8.      A cable gland as claimed in Claim 6 or Claim 7 wherein the urging member is engageable with the thimble.

9.      A new cable gland substantially as herein described and illustrated.

FIG. 1    FIG. 2

FIG. 3

FIG. 4